# FASCICULE DE BREVET EUROPEEN

(11) **EP 2 517 283 B1**
(45) Date de publication et mention de la délivrance du brevet: **15.04.2015**
(21) Numéro de dépôt: 10801655.1
(22) Date de dépôt: 13.12.2010
(51) Int. Cl.: H01M 2/10, B60L 11/18

(54) **OUTIL DE MONTAGE / DEMONTAGE D'UNE BATTERIE D'UN VEHICULE AUTOMOBILE**
WERKZEUG ZUR MONTAGE/ENTFERNUNG EINER KRAFTFAHRZEUGBATTERIE
TOOL FOR THE MOUNTING/REMOVAL OF A MOTOR VEHICLE BATTERY

(30) Priorité: 21.12.2009 FR 0959269
(43) Date de publication de la demande: 31.10.2012
(73) Titulaire: Renault S.A.S., 92100 Boulogne-Billancourt (FR)
(72) Inventeur: ESCANDE, Bruno, F-78790 Septeuil (FR); COMBE, Francois, F-78250 Meulan (FR)
(86) Numéro de dépôt international: PCT/FR2010/052677
(87) Numéro de publication internationale: WO 2011/083228

(56) Documents cités:
- WO-A1-2008/128991
- US-A1- 2007 108 877
- US-A1- 2009 074 539
- US-B1- 6 170 304

## Description

La présente invention se rapporte à un outil de montage et/ou démontage d'un conteneur d'énergie d'alimentation d'un moteur d'entraînement d'un véhicule automobile, par exemple en vue de sa recharge et/ou de son remplacement.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Il peut se révéler intéressant d'échanger ce conteneur lorsque son niveau d'énergie est faible contre un nouveau conteneur rempli d'énergie. Ceci peut être fait dans une station similaire à une station service dans laquelle on peut remplir un réservoir d'essence d'un véhicule automobile. On connaît du document WO2008/128991 un outil de montage et démontage d'un conteneur d'énergie comprenant quatre moyens d'appui et un moyen de verrouillage/déverrouillage.
On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste.

Pour un déploiement aisé des stations d'échange de conteneur d'énergie (nécessitant peu de compétence technologique), il est nécessaire de proposer un système d'échange de conteneur d'énergie fiable et robuste, et donc un procédé et un outillage associé de démontage de conteneur d'énergie performants.

Ainsi, le but de l'invention est de fournir une solution de montage ou démontage d'un conteneur d'énergie remédiant aux inconvénients mentionnés précédemment et améliorant les procédés de remplacement connus de l'art antérieur.

En particulier, l'invention propose un outil de montage ou démontage de conteneur d'énergie simple et fiable.

A cet effet, l'invention repose sur un outil de montage ou démontage d'un conteneur d'énergie d'alimentation d'un moteur d'entraînement d'un véhicule automobile, fixé sur le véhicule automobile à l'aide d'un verrou sur lequel agit un piston de mise en contrainte du verrou, caractérisé en ce qu'il comprend :
- au moins un moyen de fixation de l'outil ;
- un moyen de libération de la mise en contrainte du verrou en agissant sur le piston ;
- un moyen de verrouillage et/ou déverrouillage de la batterie.

Le moyen de verrouillage et/ou déverrouillage de la batterie peut être agencé dans la partie supérieure d'une tige mobile en rotation.

Le moyen de verrouillage et/ou déverrouillage peut présenter une liaison mâle ou femelle, de type hexagonale ou rectangle ou carrée ou plat ou méplat.

Le moyen de libération de la mise en contrainte du verrou peut présenter une mobilité en translation autour de la tige du moyen de verrouillage et/ou déverrouillage de la batterie.

Le moyen de libération de la mise en contrainte du verrou peut présenter une mobilité par un principe de vis/vérin, un vérin hydraulique, un système à came, un système pneumatique ou un levier.

Le moyen de libération de la mise en contrainte du verrou et le moyen de verrouillage et/ou déverrouillage de la batterie peuvent être aménagés dans la partie supérieure d'un corps cylindrique central de l'outil.

L'outil de montage ou démontage d'un conteneur d'énergie d'alimentation peut comprendre deux moyens de fixation de l'outil répartis symétriquement autour du moyen de libération de la mise en contrainte du verrou.

Le au moins un moyen de fixation de l'outil peut être une liaison mâle ou femelle pour une liaison de type à base d'au moins un champignon.

L'outil de montage ou démontage d'un conteneur d'énergie d'alimentation peut être portatif et adapté pour une utilisation manuelle ou peut être motorisé.

Cet outil de montage ou démontage tel que décrit ci-dessus permet donc de mettre en oeuvre le remplacement d'une batterie de véhicule automobile, et est aussi destiné à toute intervention de réparation en service après-vente d'un véhicule automobile.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue en coupe d'une batterie dotée d'un dispositif de verrouillage apte à la mise en oeuvre du procédé de montage ou démontage de batterie selon le mode d'exécution de l'invention.
La figure 2 est une vue en perspective de dessus d'un outil apte à la mise en oeuvre du procédé de montage ou démontage de batterie selon un premier mode d'exécution de l'invention.
La figure 3 est une vue en perspective de dessus d'un détail de la coopération entre la batterie et l'outil apte à la mise en oeuvre du procédé de montage ou démontage de batterie selon le premier mode d'exécution de l'invention.
La figure 4 est une vue en perspective de dessus d'un outil manuel apte à la mise en oeuvre du procédé de montage ou démontage de batterie selon un second mode d'exécution de l'invention.
La figure 5 est une vue de face en coupe transversale de l'outil manuel apte à la mise en oeuvre du procédé de montage ou démontage de batterie selon le second mode d'exécution de l'invention.

L'invention s'applique à tout véhicule comprenant un conteneur d'énergie d'alimentation positionné dans le coffre arrière ou sous le châssis. Dans la suite de la description, on décrit le démontage d'un conteneur d'énergie au travers de la description du démontage d'une batterie d'alimentation électrique d'un moteur d'entraînement d'un véhicule. L'invention s'applique toutefois à tout type de conteneur d'alimentation, ainsi qu'au montage d'un tel conteneur d'alimentation par les opérations inverses.

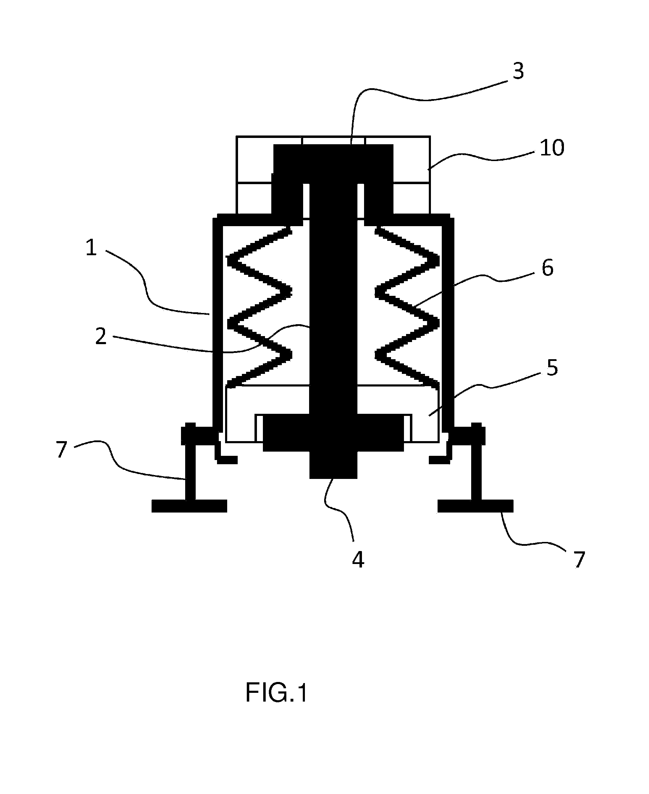

L'invention est liée au principe de fixation d'une telle batterie, illustrée sur la figure 1 à titre d'exemple. Une batterie 1 est verrouillée par un verrou 2 qui comprend une première extrémité 3, coopérant avec la caisse 10 d'un véhicule automobile qui forme une serrure pour mettre en oeuvre la fonction de verrouillage de la batterie, et une seconde extrémité 4, comprenant un moyen de liaison destiné à l'actionnement du verrou 2. Le verrou 2 est monté mobile en rotation sur la batterie, en vue de la mise en oeuvre de sa fonction de verrouillage ou déverrouillage. La batterie comprend de plus un piston 5 agissant sur le verrou 2 par un élément élastique 6, comme un ressort, afin de maintenir le verrou 2 en position verrouillée de manière sécurisée.

Plus généralement, le procédé de démontage de la batterie, qui va être décrit ci-après, est adapté à tout principe de fixation de batterie du type précédent, combinant un verrou tournant associé à un dispositif de mise en contrainte du verrou.

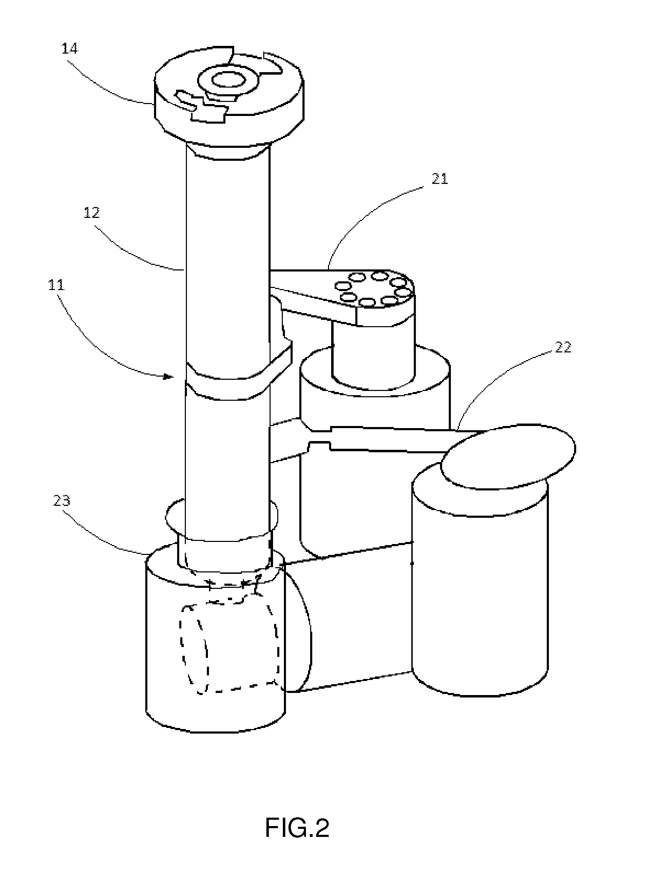

Le procédé de démontage de la batterie 1 est mis en oeuvre à l'aide d'un outil 11, par exemple tel que représenté en figure 2, qui sera décrit ultérieurement. Il comprend les deux étapes essentielles suivantes, mises en oeuvre de manière automatique par l'outil 11 :
E1 : action sur le piston 5 pour obtenir un déplacement relatif du piston 5 par rapport au verrou 2, afin de débrayer ce dernier ;
E2 : rotation du verrou 2 de sorte de laisser passer le verrou hors de la serrure et de le déverrouiller.

La première étape E1 peut simplement consister à pousser le piston 5 pour le déplacer en translation, contre l'effort du moyen élastique 6. La seconde étape E2 peut consister en une rotation d'un quart de tour du verrou, voire une rotation inférieure ou égale à un demi-tour.

Le procédé peut comprendre une étape préalable E0 de fixation de l'outil 11 sur des éléments correspondants 7 au niveau de la caisse du véhicule ou de la batterie, afin d'assurer son bon positionnement par rapport à la batterie 1 et notamment son système de verrouillage avant la mise en oeuvre du procédé de démontage décrit précédemment de manière fiable et performante.

Les éléments de fixation 7 de l'outil 11 peuvent se présenter sous forme de champignons, qui seront de préférence disposés de sorte d'être accessibles, de forme facile à nettoyer, résistants aux fortes contraintes subies et peu encombrants. Avantageusement, deux champignons sont répartis symétriquement autour du verrou, afin d'obtenir un maintien stable de l'outil. En variante, tout autre nombre de champignons et toute forme d'éléments de fixation 7 sont acceptables sans sortir du concept de l'invention.

La fixation de l'outil sur les champignons peut être obtenue selon deux types de mouvement : soit par une translation, soit par une rotation dans le plan des champignons.

Enfin, le procédé de démontage comprend une dernière étape E4 de retrait de la batterie déverrouillée. Pour cela, l'outil 11 peut simplement être rappelé en translation pour obtenir son retrait et simultanément celui de la batterie.

La mise en oeuvre de ces étapes du procédé de démontage de la batterie est donc obtenue par des mouvements d'un outil 11, qui peuvent être effectués de différentes manières, par des actionneurs indépendants, de type électrique, hydraulique, par une cinématique à came, etc.

La figure 2 illustre un premier mode de réalisation d'un outil 11 permettant la mise en oeuvre automatique du procédé de démontage d'une batterie selon l'invention.

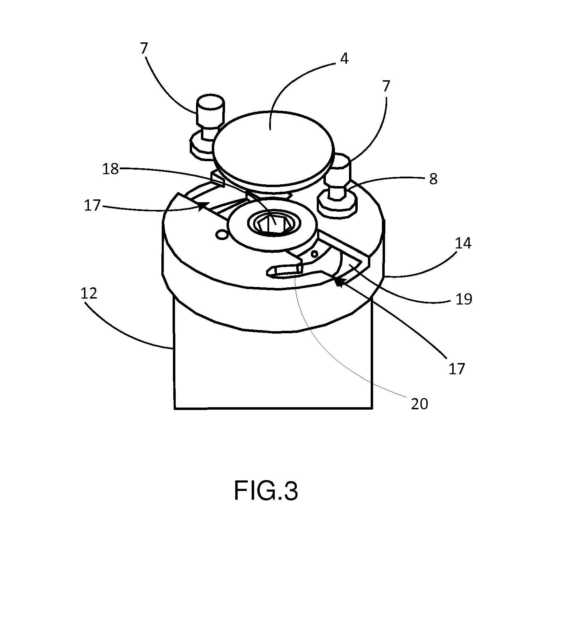

L'outil 11 comprend une extrémité supérieure 14 montée sur une tige verticale cylindrique 12 destinée à coopérer avec la partie de liaison du verrou 2. Cette coopération est plus précisément illustrée sur la figure 3, dans une phase d'approche de l'outil 11 du verrou 2, dont seule la partie inférieure de liaison 4 et les deux éléments de liaison latéraux 7 en forme de champignons de fixation sont représentés. L'extrémité 14 de l'outil 11 comprend deux lumières 17 disposées symétriquement autour d'un élément de liaison 18 qui se présente sous la forme d'une mortaise apte à recevoir une tige correspondante, pour former une coopération de type plat/méplat, non représentée, disposée sous la surface de l'élément de liaison 4 du verrou 2. Chaque lumière 17 présente une partie sensiblement circulaire 19, de taille importante correspondant à un champignon 7, de sorte de pouvoir insérer un tel champignon par cette partie circulaire 19. Ensuite, chaque lumière 17 comprend une partie plus étroite 20, formant une portion d'arc de cercle, au sein de laquelle peut se déplacer la partie plus étroite 8 d'un champignon après son insertion dans l'ouverture 19. Ainsi, lors de l'étape E0 de fixation de l'outil 11, les ouvertures 19 sont approchées des champignons jusqu'à l'insertion de ces derniers au sein de ces ouvertures, avant une rotation de l'axe 12 assurant la fixation verrouillée de l'outil 11 par les champignons. En variante, cette fixation pourrait être obtenue par une autre géométrie et/ou d'autres mouvements, comme une translation. Ensuite, la partie centrale de l'axe 12 se déplace en translation verticale pour venir en appui sur le piston 5 et débrayer le verrou, selon l'étape E1. Enfin, la rotation de l'élément de liaison 18 entraîne le verrou en rotation pour le déverrouiller, selon l'étape E2.

Pour obtenir ces différents mouvements, l'outil 11 possède trois moteurs indépendants, par exemple, électriques, pneumatiques ou hydrauliques, une biellette supérieure 21 qui permet la fixation de l'outil sur les champignons, une biellette inférieure 22 qui permet la rotation de la partie centrale de l'axe 12 pour déverrouiller le verrou, et un dispositif 23 de mise en translation de l'axe 12. Ces deux mouvements peuvent être couplés.

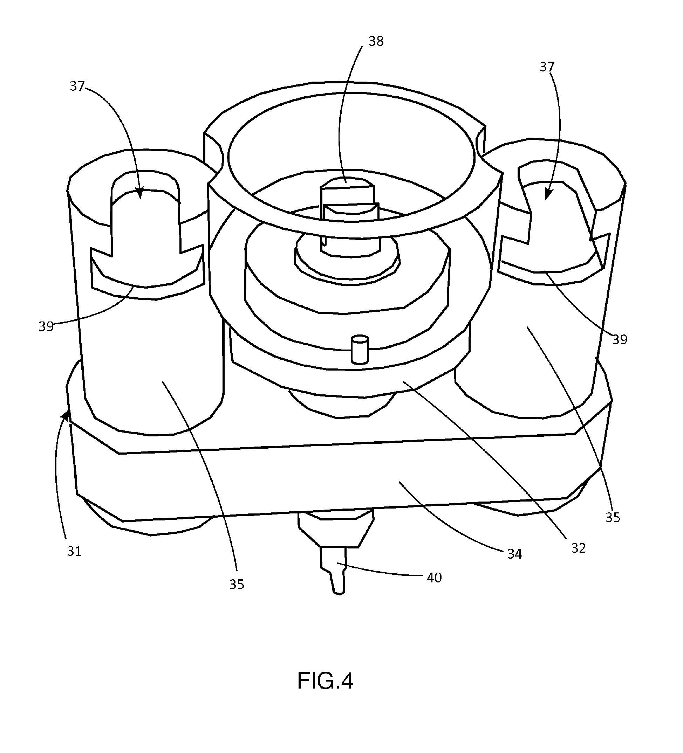

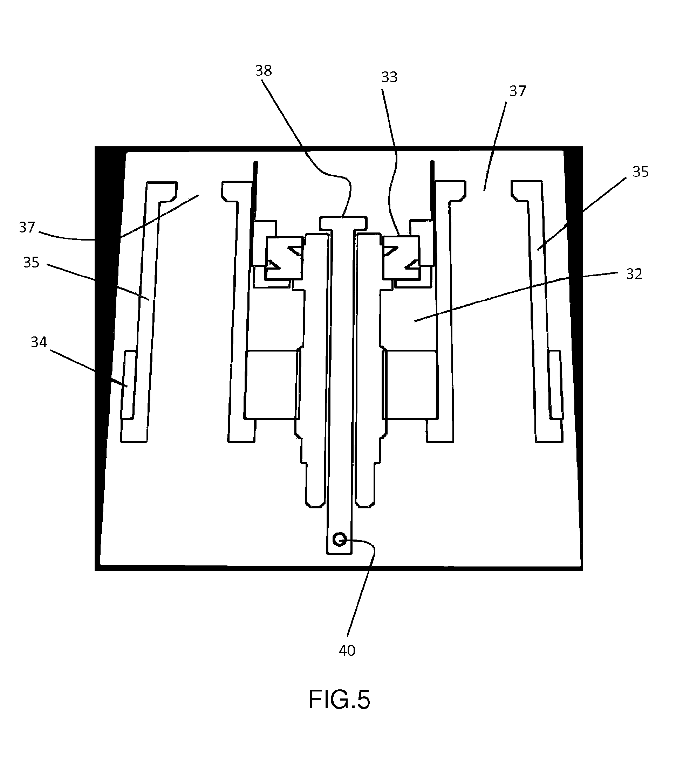

Les figures 4 et 5 illustrent un outil de montage et/ou démontage 31 manuel d'une batterie selon un second mode d'exécution de l'invention. Cet outil comprend une embase 34 au-dessus de laquelle s'étend un corps cylindrique central 32, comprenant une première tige centrale dont l'extrémité supérieure forme un élément de liaison 38 destiné à coopérer avec l'élément de liaison correspondant du verrou. Dans ce mode d'exécution, cette liaison est de type plat/méplat. Cette tige centrale comprend un élément d'actionnement 40 dans sa partie inférieure, sous l'embase 34, prévue pour la mise en oeuvre manuelle de sa rotation. Autour de cette tige centrale se trouve un élément complémentaire, mobile en translation par un principe de vis-vérin, dont l'extrémité supérieure 33 est destinée à venir en appui sur le piston de sorte de libérer le verrou de sa contrainte. En variante, cette mobilité pourrait être obtenue par toute autre solution, un vérin hydraulique, à base de came, un système pneumatique, ou un levier, etc. Enfin, l'outil 31 comprend deux parties latérales cylindriques 35 comportant des éléments de fixation 37 dans leur partie supérieure pour coopérer avec les éléments de fixation 7 prévus sur la batterie. Dans ce mode d'exécution, ces éléments de fixation 37 comprennent une ouverture 39 dans la partie périphérique permettant l'intégration d'une partie large inférieure d'un élément de liaison de type champignon tel que représenté sur la figure 3, puis une ouverture vers le haut pour laisser passer la partie plus étroite 8 d'un tel champignon. Cette géométrie assure aussi le maintien dans la direction parallèle à l'axe des cylindres 35, destinée à être sensiblement verticale, de l'outil sur la batterie.

L'outil selon le second mode d'exécution est ainsi adapté pour une manipulation rapide et une utilisation purement manuelle. Cet outil, qui permet une utilisation manuelle ergonomique, est un outil portatif. Il est plus particulièrement destiné à la réparation des véhicules automobiles en concession, en opération d'après-vente, voire utilisable en usine de montage.

Finalement, deux types d'outil ont été décrits à titre d'exemple. D'autres géométries pourraient être imaginées. Il ressort de la description précédente que l'invention concerne finalement un outil de montage ou démontage d'une batterie qui comprend les trois moyens essentiels suivants :
- au moins un moyen de fixation de l'outil sur la batterie, voire sur la caisse. La fixation sur la batterie permet d'éviter un transfert d'effort important sur la caisse. Ce moyen de fixation a pour fonction de servir d'appui pour assurer le transfert d'effort de l'outil sur la batterie pour réaliser sa libération ;
- un moyen de libération de la mise en contrainte du verrou, qui peut consister en un élément mobile en translation verticale ;
- un moyen de verrouillage et/ou déverrouillage de la batterie, qui peut consister en une mise en rotation d'un verrou.

## Revendications

1. Outil de montage ou démontage (11 ; 31) d'un conteneur d'énergie d'alimentation d'un moteur d'entraînement d'un véhicule automobile, fixé sur le véhicule automobile à l'aide d'un verrou (2) sur lequel agit un piston (5) de mise en contrainte du verrou (2), **caractérisé en ce qu'**il comprend :
- au moins un moyen de fixation (17 ; 37) de l'outil ;
- un moyen de libération (33) de la mise en contrainte du verrou (2) en agissant sur le piston (5) ;
- un moyen de verrouillage et/ou déverrouillage (18 ; 38) de la batterie.

2. Outil de montage ou démontage d'un conteneur d'énergie d'alimentation selon la revendication 1, **caractérisé en ce que** le moyen de verrouillage et/ou déverrouillage (18 ; 38) de la batterie est agencé dans la partie supérieure d'une tige mobile en rotation.

3. Outil de montage ou démontage d'un conteneur d'énergie d'alimentation selon la revendication précédente, **caractérisé en ce que** le moyen de verrouillage et/ou déverrouillage (18 ; 38) présente une liaison mâle ou femelle, de type hexagonale ou rectangle ou carrée ou plat ou méplat.

4. Outil de montage ou démontage d'un conteneur d'énergie d'alimentation selon la revendication 2 ou 3, **caractérisé en ce que** le moyen de libération (33) de la mise en contrainte du verrou (2) présente une mobilité en translation autour de la tige du moyen de verrouillage et/ou déverrouillage (18 ; 38) de la batterie.

5. Outil de montage ou démontage d'un conteneur d'énergie d'alimentation selon la revendication précédente, **caractérisé en ce que** le moyen de libération (33) de la mise en contrainte du verrou (2) présente une mobilité par un principe de vis/vérin, un vérin hydraulique, un système à came, un système pneumatique ou un levier.

6. Outil de montage ou démontage d'un conteneur d'énergie d'alimentation selon l'une des revendications précédentes, **caractérisé en ce que** le moyen de libération (33) de la mise en contrainte du verrou (2) et le moyen de verrouillage et/ou déverrouillage (18 ; 38) de la batterie sont aménagés dans la partie supérieure d'un corps cylindrique central (12 ; 32) de l'outil.

7. Outil de montage ou démontage d'un conteneur d'énergie d'alimentation selon l'une des revendications précédentes, **caractérisé en ce qu'**il comprend deux moyens de fixation (17 ; 37) de l'outil répartis symétriquement autour du moyen de libération (33) de la mise en contrainte du verrou (2).

8. Outil de montage ou démontage d'un conteneur d'énergie d'alimentation selon l'une des revendications précédentes, **caractérisé en ce que** le au moins un moyen de fixation (17 ; 37) de l'outil est une liaison mâle ou femelle pour une liaison de type à base d'au moins un champignon.

9. Outil de montage ou démontage d'un conteneur d'énergie d'alimentation selon l'une des revendications précédentes, **caractérisé en ce qu'**il est portatif et adapté pour une utilisation manuelle.

10. Outil de montage ou démontage d'un conteneur d'énergie d'alimentation selon l'une des revendications 1 à 8, **caractérisé en ce qu'**il est motorisé.

## Patentansprüche

1. Werkzeug (11; 31) zum Einbau oder Ausbau eines Energiespeichers zur Energieversorgung eines Motors zum Antrieb eines Kraftfahrzeugs, der mithilfe einer Sicherungsvorrichtung (2) an dem Kraftfahrzeug angebracht ist, auf die ein Kolben (5) zum Stellen der Sicherungsvorrichtung (2) unter Last einwirkt, **dadurch gekennzeichnet, dass** es Folgendes umfasst:
- mindestens ein Mittel (17; 37) zur Befestigung des Werkzeugs;
- ein Mittel (33) zum Lösen der Last an der Sicherungsvorrichtung (2) durch Einwirken auf den Kolben (5);
- ein Mittel (18; 38) zum Sichern und/oder Freigeben der Batterie.

2. Werkzeug zum Einbau oder Ausbau eines Energiespeichers zur Energieversorgung nach Anspruch 1, **dadurch gekennzeichnet, dass** das Mittel (18; 38) zum Sichern und/oder Freigeben der Batterie im oberen Teil einer drehbeweglichen Stange angeordnet ist.

3. Werkzeug zum Einbau oder Ausbau eines Energiespeichers zur Energieversorgung nach dem vorhergehenden Anspruch, **dadurch gekennzeichnet, dass** das Mittel (18; 38) zum Sichern und/oder Freigeben eine Steckverbindung oder eine Aufnahmeverbindung vom hexagonalen oder rechteckigen oder quadratischen oder flachen oder abgeflachten Typ aufweist.

4. Werkzeug zum Einbau oder Ausbau eines Energiespeichers zur Energieversorgung nach Anspruch 2 oder 3, **dadurch gekennzeichnet, dass** das Mittel (33) zum Lösen der Last an der Sicherungsvorrichtung (2) eine Translationsbeweglichkeit um die Stange des Mittels (18; 38) zum Sichern und/oder Freigeben der Batterie aufweist.

5. Werkzeug zum Einbau oder Ausbau eines Energiespeichers zur Energieversorgung nach dem vorhergehenden Anspruch, **dadurch gekennzeichnet, dass** das Mittel (33) zum Lösen der Last an der Sicherungsvorrichtung (2) eine Beweglichkeit über ein Schraubspindelprinzip, einen Hydraulikzylinder, ein Nockensystem, ein Pneumatiksystem oder einen Hebel aufweist.

6. Werkzeug zum Einbau oder Ausbau eines Energiespeichers zur Energieversorgung nach einem der vorhergehenden Ansprüche, **dadurch gekennzeichnet, dass** das Mittel (33) zum Lösen der Last an der Sicherungsvorrichtung (2) und das Mittel (18; 38) zum Sichern und/oder Freigeben der Batterie im oberen Teil eines mittleren zylindrischen Körpers (12; 32) des Werkzeugs angeordnet sind.

7. Werkzeug zum Einbau oder Ausbau eines Energiespeichers zur Energieversorgung nach einem der vorhergehenden Ansprüche, **dadurch gekennzeichnet, dass** es zwei Mittel (17; 37) zur Befestigung des Werkzeugs umfasst, die symmetrisch um das Mittel (33) zum Lösen der Last an der Sicherungsvorrichtung (2) verteilt sind.

8. Werkzeug zum Einbau oder Ausbau eines Energiespeichers zur Energieversorgung nach einem der vorhergehenden Ansprüche, **dadurch gekennzeichnet, dass** das mindestens eine Mittel (17; 37) zur Befestigung des Werkzeugs eine Steckverbindung oder eine Aufnahmeverbindung für eine Verbindung der Art mit mindestens einem Pilzkopf ist.

9. Werkzeug zum Einbau oder Ausbau eines Energiespeichers zur Energieversorgung nach einem der vorhergehenden Ansprüche, **dadurch gekennzeichnet, dass** es transportiert werden kann und für eine manuelle Verwendung ausgelegt ist.

10. Werkzeug zum Einbau oder Ausbau eines Energiespeichers zur Energieversorgung nach einem der Ansprüche 1 bis 8, **dadurch gekennzeichnet, dass** es mit einem Motor versehen ist.

## Claims

1. Tool (11, 31) for mounting or removing a container of energy that powers an engine or motor that propels a motor vehicle, fixed to the motor vehicle using a lock (2) on which there acts a piston (5) that loads the lock (2), **characterized in that** it comprises:
- at least one tool attachment means (17; 37);
- a means (33) for releasing the load on the lock (2) by acting on the piston (5);
- a means (18; 38) for locking and/or unlocking the battery.

2. Tool for mounting or removing a power supply energy container according to Claim 1, **characterized in that** the means (18; 38) for locking and/or unlocking the battery is arranged in the upper part of a rod capable of turning.

3. Tool for mounting or removing a power supply energy container according to the preceding claim, **characterized in that** the locking and/or unlocking means (18; 38) has a male or female connection, of the hexagonal or rectangular or square or flat or flatted type.

4. Tool for mounting or removing a power supply energy container according to Claim 2 or 3, **characterized in that** the means (33) for releasing the load on the lock (2) has translational mobility about the rod of the means (18; 38) for locking and/or unlocking the battery.

5. Tool for mounting or removing a power supply energy container according to the preceding claim, **characterized in that** the means (33) for releasing the load on the lock (2) has mobility via a screw/jack principle, a hydraulic actuator, a cam system, a pneumatic system or a lever.

6. Tool for mounting or removing a power supply energy container according to one of the preceding claims, **characterized in that** the means (33) for releasing the load on the lock (2) and the means (18; 38) for locking and/or unlocking the battery are formed in the upper part of a central cylindrical body (12; 32) of the tool.

7. Tool for mounting or removing a power supply energy container according to one of the preceding claims, **characterized in that** it comprises two tool attachment means (17; 37) distributed symmetrically about the means (33) for releasing the load on the lock (2).

8. Tool for mounting or removing a power supply energy container according to one of the preceding claims, **characterized in that** the at least one tool attachment means (17; 37) is a male or female connection for a connection of the type based on at least one mushroom head.

9. Tool for mounting or removing a power supply energy container according to one of the preceding claims, **characterized in that** it is portable and suited to manual use.

10. Tool for mounting or removing a power supply energy container according to one of Claims 1 to 8, **characterized in that** it is motorized.
